# EUROPEAN PATENT APPLICATION

(11) **EP 3 739 798 A1**
(43) Date of publication of application: **18.11.2020**
(21) Application number: 19738765.7
(22) Date of filing: 04.01.2019
(51) Int. Cl.: H04L 5/00

(54) **RESOURCE MONITORING METHOD, TERMINAL, AND BASE STATION**

(30) Priority: 11.01.2018 CN 201810027940
(71) Applicant: Vivo Mobile Communication Co., Ltd., Dongguan, Guangdong 523860 (CN)
(72) Inventor: ZHOU, Jianping, Dongguan, Guangdong 523860 (CN); YANG, Xiaodong, Dongguan, Guangdong 523860 (CN); WU, Yumin, Dongguan, Guangdong 523860 (CN); ZHANG, Yanxia, Dongguan, Guangdong 523860 (CN); SUN, Peng, Dongguan, Guangdong 523860 (CN); SHEN, Xiaodong, Dongguan, Guangdong 523860 (CN); YANG, Yu, Dongguan, Guangdong 523860 (CN)
(74) Representative: Lavoix
(86) International application number: PCT/CN2019/070370
(87) International publication number: WO 2019/137306

(57) **Abstract**

A resource monitoring method, a terminal, and a base station are provided. The method of the present disclosure includes receiving a CORESET configuration information sent by a base station, wherein the CORESET configuration information indicates a CORESET; determining, according to a predefined TCI state or a first downlink MAC CE sent by the base station, a target TCI state used for monitoring the CORESET; monitoring the CORESET according to the target TCI state.

## Description

### CROSS-REFERENCE TO RELATED APPLICATION

This application claims a priority to Chinese Patent Application No. 201810027940.8 filed on January 11, 2018, the disclosures of which are incorporated in their entirety by reference herein.

### TECHNICAL FIELD

The present disclosure relates to the field of communication application, in particular, relates to a resource monitoring method, a terminal, and a base station.

### BACKGROUND

A Control Resource Set (CORESET) is introduced in New Radio (NR). The CORESET includes a plurality of search spaces, and each search spaces includes a plurality of candidate positions available for transmitting Physical Downlink Control Channels (PDCCHs). A time duration currently supporting the CORESET may be 1, 2, or 3 time-domain consecutive Orthogonal Frequency Division Multiplexing (OFDM) symbols. Every 2, 3 or 6 Resource Element Groups (REGs) constitute a REG bundle, and PDCCH resource allocation is performed in a minimum unit of a REG bundle. One REG is defined as a Resource Block (RB) in a frequency domain and an OFDM symbol in a time domain. A CORESET may include a plurality of Control Channel Elements (CCEs), and one CCE includes 6 REGs. The number of CCEs contained in one COREST is called an aggregation level (AL), for example, the aggregation level of a CORESET, which occupies two symbols in the time domain and occupies 24 RBs in the frequency domain, is 8.

In a non-initial cell access phase, if a user equipment (UE) is newly configured with a CORESET, and the UE does not receive an MAC CE indication indicating at which TCI a CORESET is monitored, then in such a case, there is no solution for problems of whether the UE can start to monitor the CORESET or not, and if monitoring is to be performed, then which TCI may be used.

### SUMMARY

An objective of the present disclosure is to provide a resource monitoring method, a terminal, and a base station to solve the problem of how to perform monitoring of a CORESET when a terminal is newly configured with the CORESET.

In a first aspect, a resource monitoring method applied to a terminal is provided. The method includes receiving Control Resource Set (CORESET) configuration information sent by a base station, wherein the CORESET configuration information indicates a CORESET; determining, according to a predefined Transmission Configuration Indication (TCI) state or a first downlink Media Access Control Control Element (MAC CE) sent by the base station, a target TCI state used for monitoring the CORESET; monitoring the CORESET according to the target TCI state; wherein the first downlink MAC CE is a downlink MAC CE including an activated TCI state.

In a second aspect, a resource monitoring method applied to a base station is provided. The method includes sending Control Resource Set (CORESET) configuration information to a terminal, wherein the CORESET configuration information indicates a CORESET; sending a first downlink Media Access Control Control Element (MAC CE) to the terminal; wherein the first downlink MAC CE is a downlink MAC CE including an activated TCI state.

In a third aspect, a terminal is provided. The terminal includes: a receiving module, used for receiving Control Resource Set (CORESET) configuration information sent by a base station, wherein the CORESET configuration information indicates a CORESET; a first determining module, used for determining, according to a predefined Transmission Configuration Indication (TCI) state or a first downlink Media Access Control Control Element (MAC CE) sent by the base station, a target TCI state used for monitoring the CORESET; a monitoring module, used for monitoring the CORESET according to the target TCI state; wherein the first downlink MAC CE is a downlink MAC CE including an activated TCI state.

In a fourth aspect, a terminal is provided. The terminal includes a storage, a processor, and a computer program stored on the storage and executable by the processor, wherein when the computer program is executed by the processor, the processor implements steps of the above resource monitoring method.

In a fifth aspect, a computer readable storage medium is provided. A computer program is stored on the computer readable storage medium, wherein when the computer program is executed by a processor, the processor implements steps of the above resource monitoring method.

In a sixth aspect, a base station is provided. The base station includes: a first sending module, used for sending Control Resource Set (CORESET) configuration information to a terminal, wherein the CORESET configuration information indicates a CORESET; a second sending module, used for sending a first downlink Media Access Control Control Element (MAC CE) to the terminal; wherein the first downlink MAC CE is a downlink MAC CE including an activated TCI state.

In a seventh aspect, a base station is provided. The base station includes a storage, a processor, and a computer program stored on the storage and executable by the processor, wherein when the computer program is executed by the processor, the processor implements steps of the above resource monitoring method applied to the base station side.

In an eighth aspect, a computer readable storage medium is provided. A computer program is stored on the computer readable storage medium, wherein when the computer program is executed by a processor, the processor implements steps of the above resource monitoring method applied to the base station side.

The embodiments of the present disclosure have the following beneficial effects.

In the embodiments of the present disclosure, after the terminal receives the Control Resource Set (CORESET) configuration information configured by the base station, the terminal determines, according to the predefined TCI state or the first downlink MAC CE transmitted by the base station, the target TCI state used for monitoring the CORESET, and monitors the CORESET according to the determined target TCI state, thereby solving the problem of how to perform monitoring of a CORESET if the terminal is newly configured with the CORESET. In addition, the method of the present disclosure can flexibly change the target TCI state used for monitoring a CORESET, and has higher flexibility in resource configuration.

### BRIEF DESCRIPTION OF THE DRAWINGS

In order to more clearly explain technical solutions of the embodiments of the present disclosure, accompany drawings to be used in description of the embodiments of the present disclosure will be briefly described below. It will be apparent that the drawings in the following description are only some embodiments of the present disclosure, and other drawings may be obtained from these drawings without paying creative labor by those of ordinary skill in the art.
FIG. 1 is a first flowchart of a resource monitoring method according to an embodiment of the present disclosure;
FIG. 2 is a schematic diagram of a first format of a first downlink MAC CE according to an embodiment of the present disclosure;
FIG. 3 is a schematic diagram of a sub-header of a first downlink MAC CE shown in FIG. 2;
FIG. 4 is a schematic diagram of a second format of a first downlink MAC CE according to an embodiment of the present disclosure;
FIG. 5 is a schematic diagram of a sub-header of the first downlink MAC CE shown in FIG. 4;
FIG. 6 is a schematic diagram of a format of a second downlink MAC CE according to an embodiment of the present disclosure;
FIG. 7 is a second flowchart of a resource monitoring method according to an embodiment of the present disclosure;
FIG. 8 is a schematic diagram of modules of a base station according to an embodiment of the present disclosure;
FIG. 9 is a structural block diagram of a base station according to an embodiment of the present disclosure;
FIG. 10 is a schematic diagram of modules of a terminal according to an embodiment of the present disclosure;
FIG. 11 is a structural block diagram of a terminal according to an embodiment of the present disclosure.

### DETAILED DESCRIPTION

The technical solutions in the embodiments of the present disclosure will be clearly and completely described in connection with the accompany drawings in the embodiments of the present disclosure. Obviously, the described embodiments are only a part, rather than all, of the embodiments of the present disclosure. Based on the embodiments of the present disclosure, all other embodiments obtained by those of ordinary skill in the art without paying creative labor are within the protection scope of the present disclosure.

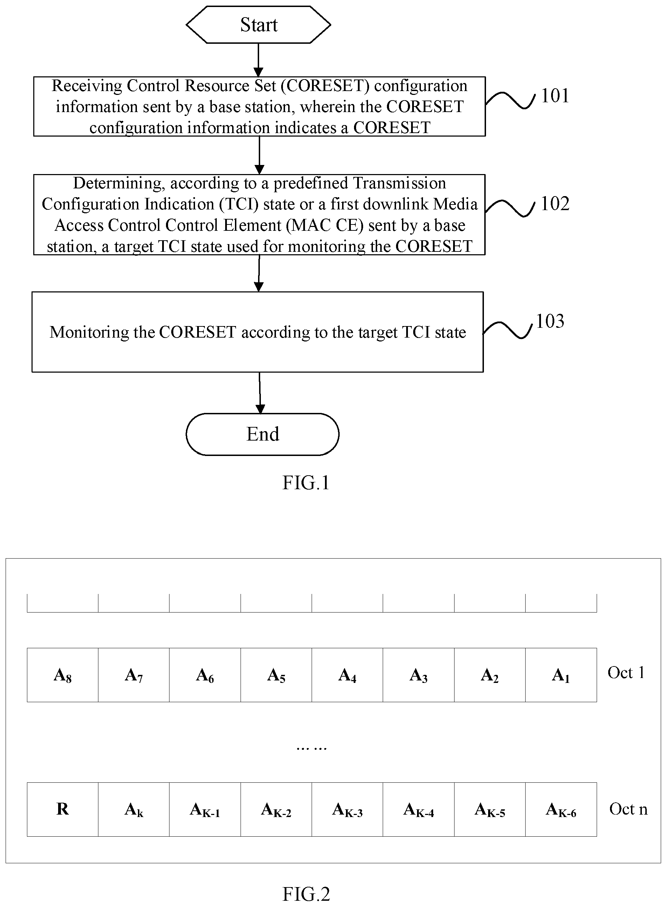

FIG. 1 is a flowchart of a resource monitoring method according to an embodiment of the present disclosure. As shown in FIG. 1, the resource monitoring method according to the embodiment of the present disclosure is applied to a terminal. The resource monitoring method includes steps 101-103.

Step 101: receiving Control Resource Set (CORESET) configuration information sent by a base station, wherein the CORESET configuration information indicates a CORESET.

The Control Resource Set (CORESET) includes a plurality of search spaces, the plurality of search spaces include a plurality of candidate positions available for transmitting a Physical Downlink Control Channel (PDCCH).

Step 102: determining, according to a predefined Transmission Configuration Indication (TCI) state or a first downlink Media Access Control Control Element (MAC CE) sent by a base station, a target TCI state used for monitoring the CORESET.

Here, the first downlink MAC CE is a downlink MAC CE including an activated TCI state.

The target TCI state may be a TCI activated in the MAC CE, or may be a Synchronization Signal Block (SSB) used when the terminal initially accesses a cell, the predefined TCI state is a TCI state pre-configured by the base station or agreed by a protocol.

Step 103: monitoring the CORESET according to the target TCI state.

After the terminal receives the Control Resource Set (CORESET) configuration information configured by the base station, the terminal determines, according to the predefined TCI state or the first downlink MAC CE transmitted by the base station, the target TCI state used for monitoring the CORESET, and monitors the CORESET according to the determined target TCI state, thereby solving the problem of how to perform monitoring of a CORESET if the terminal is newly configured with the CORESET. In addition, the method of the present disclosure can flexibly change the target TCI state used for monitoring a CORESET, and has higher flexibility in resource configuration.

Further, in step 102, determining, according to the first downlink Media Access Control Control Element (MAC CE) sent by the base station, the target TCI state used for monitoring the CORESET includes: after receiving the first downlink Media Access Control Control Element (MAC CE) sent by the base station, determining a TCI state activated in the first downlink MAC CE as the target TCI state.

Here, after the terminal receives the first downlink Media Access Control Control Element (MAC CE), the terminal takes the TCI state activated in the first downlink MAC CE as the target TCI state, and starts to monitor the CORESET using the target TCI state;

In the embodiment, the terminal starts monitoring the CORESET after receiving the first MAC CE and determining the target TCI state through the first MAC CE. Specifically, if the activated TCI state is in an N-th subframe, then the terminal is indicated to start monitoring the CORESET in an (N+t)-th subframe, where N is a positive integer, t is a natural number, and t may be configured by a physical layer or may be pre-agreed by a protocol, and a unit of t may be a subframe or a symbol or a microsecond (ms).

Here, the target TCI state is determined through the first downlink MAC CE transmitted by the base station, and a signaling overhead is saved.

Further, indices corresponding to K or M TCI states are mapped in the first downlink MAC CE, and an index corresponding to the activated TCI state is a first preset threshold value, an index corresponding to an unactivated TCI state is a second preset threshold value, and there is only one activated TCI state among the K or M TCI states.

The maximum number of TCI states is M, both K and M are positive integers greater than 2, and K is less than or equal to M. The first preset threshold value may be specifically 1, and the second preset threshold may be specifically 0. K is the number of TCI states configured by the base station for the terminal via a Radio Resource Control (RRC) to monitor a CORESET, and M may specifically be 128.

In a specific embodiment of the present disclosure, since the number M of TCI states is configured by a Radio Resource Control (RRC), a maximum value of M is 128, and the network side configures K TCI states for the terminal to monitor a CORESET, the above-mentioned target TCI state is one, which is specifically indicated by the MAC CE, of the K TCI states. The MAC CE may specifically have two formats, the first format is the maximum number of TCI States configured based on the Radio Resource Control (RRC), that is, the maximum value of the MAC CE is determined based on a value of K, and in such a case, a variable-length manner is adopted, as shown in FIG. 2.

n = ceiling (k/8), ceiling denotes a round-up function; i in Ai denotes an index of a corresponding TCI state. When a bit position of Ai is "1", this indicates that the TCI state is used to monitor a CORESET (i.e. activated); when the bit position of Ai is "0", this indicates that the TCI state is not used to monitor a CORESET. It should be noted that a bit corresponding one and only one TCI state may be set to a value of 1. Since bytes of the MAC CE are aligned, extra bits obtained by using n = ceiling (k/8) will be used as reserved bits, represented by "R," with a value of 0.

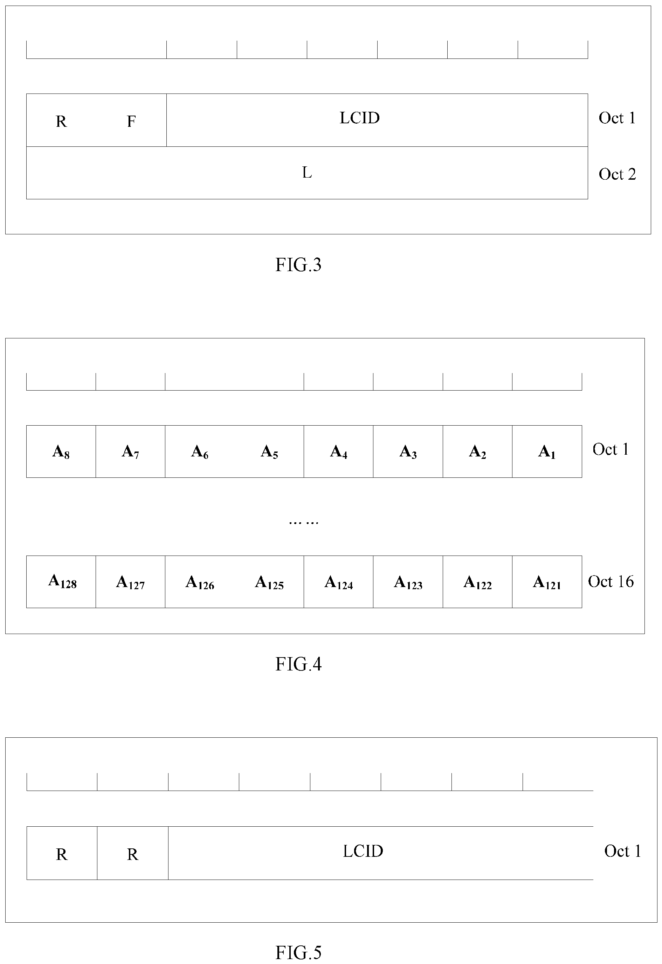

In such a case, a sub-header corresponding to the MAC CE is shown in FIG. 3, and a Logical Channel Identifier (LCID) indicates that the MAC CE is a MAC CE for transmitting an activation instruction or a deactivation instruction of a TCI State. "L" indicates a length of the MAC CE, and has a unit of byte, which may be 8 bits or 15 bits, which one of the 8 bits or the 15 bits is specifically identified by "F". When "F" is "0", it indicates 8 bits, and when "F" is "0", it indicates 16 bits, and "Oct 1" indicates "byte 1", "Oct n" represents "byte n".

The second format of the MAC CE adopts a format of a fixed size, K takes a value of 128 bits i.e., the maximum value of M. As shown in FIG. 4, i in Ai denotes an index of a corresponding TCI state, and when a value of a bit position of the Ai is "1", it indicates that the TCI state is used to monitor a CORESET (i.e. activated); and when the value of the bit position of the Ai is "0", it indicates that the TCI state is not used to monitor a CORESET". It should be noted that a bit corresponding one and only one TCI state may be set to a value of 1.

In such a case, a sub-header corresponding to the MAC CE is shown in FIG. 5, and an LCID indicates that the MAC CE is a MAC CE for transmitting an activation instruction or a deactivation instruction of a TCI State.

In the above implementation, the target TCI state is determined by the two formats of the MAC CE, thereby saving a signaling overhead and flexibly changing the TCI state for monitoring the CORESET.

Further, in step 102, determining, according to the predefined Transmission Configuration Indication (TCI) state, the target TCI state used for monitoring the CORESET includes: first determining a synchronization signal block as the target TCI state, and when the first downlink MAC CE is received, changing the target TCI state to a TCI state activated in the first downlink MAC CE.

Here, after the terminal receives a Control Resource Set (CORESET) configured by the base station, the terminal first takes a synchronization signal block as the target TCI state and starts monitoring the CORESET and when the first downlink MAC CE is received, the target TCI state is changed to the TCI state activated in the first downlink MAC CE.

The synchronization signal block is a synchronization signal block used by the terminal at the time of initial access. In this implementation, once the terminal is newly configured with a CORESET, the terminal starts monitoring the CORESET by using the synchronization signal block used at the time of initial access; and after a DL MAC CE is received, the terminal change the TCI State used to monitor this CORESET.

In the implementation, indices corresponding to K or M TCI states are mapped in the first downlink MAC CE, and the index corresponding to the activated TCI state is the first preset threshold value, the index corresponding to the unactivated TCI state is the second preset threshold value, and there is only one activated TCI state among the K or M TCI states.

The maximum number of TCI states is M, both K and M are positive integers greater than 2, and K is less than or equal to M. The first preset threshold value may be specifically 1, and the second preset threshold may be specifically 0. K is the number of TCI states configured by the base station for the terminal via an RRC to monitor a CORESET, and M may specifically be 128. A format of the first MAC CE is the same as that of the MAC CE in the above implementation, and the sub-header of the MAC CE is shown in FIG. 3 and FIG. 5.

In this implementation, when the terminal is newly configured with a CORESET, the synchronization signal block used at the time of initial access is used to start monitoring the CORESET, and the TCI state used for monitoring the CORESET is changed after receiving the DL MAC CE, thereby addressing the problem of how to monitor the CORESET when the terminal is newly configured with a CORESET.

Further, in step 102, determining, according to the predefined Transmission Configuration Indication (TCI) state, the target TCI state used for monitoring the CORESET, includes: first, determining the predefined TCI state as the target TCI state, and when the first downlink MAC CE is received, changing the target TCI state to a TCI state activated in the first downlink MAC CE; wherein the predefined TCI state is a TCI state pre-configured by a base station or agreed by a protocol.

The predefined TCI state may specifically be pre-configured by a base station through the RRC, such as the RRC configures a first TCI state of a plurality of TCI states of the CORESET to be the pre-defined TCI state; or, a TCI state, having the smallest or largest index, among the plurality of TCI states is specified by a protocol as the pre-defined TCI state. In the implementation, indices corresponding to K or M TCI states are mapped in the first downlink MAC CE, and the index corresponding to the activated TCI state is the first preset threshold value, the index corresponding to the unactivated TCI state is the second preset threshold value, and there is only one activated TCI state among the K or M TCI states.

The maximum number of TCI states is M, both K and M are positive integers greater than 2, and K is less than or equal to M. The first preset threshold value may be specifically 1, and the second preset threshold may be specifically 0. K is the number of TCI states configured by the base station for the terminal via an RRC to monitor a CORESET, and M may specifically be 128. A format of the first MAC CE is the same as that of the MAC CE in the above implementation, and the sub-header of the MAC CE is shown in FIG. 3 and FIG. 5.

In this implementation, when the terminal receives a CORESET sent by the base station, the terminal first monitors the CORESET through a pre-defined TCI state; and after the MAC CE is received, the terminal changes the TCI state used for monitoring the CORESET, thereby addressing the problem of how to monitor the CORESET when the terminal is newly configured with a CORESET.

In addition, in a specific embodiment of the present disclosure, the terminal cannot monitor the CORESET without a limited time duration, and another LCID may be used to indicate a corresponding MAC CE, so as to indicate whether monitoring the CORESET should be stopped.

The resource monitoring method of the embodiment of the present disclosure further includes: when receiving a second downlink MAC CE sent by a base station, stopping monitoring the CORESET, wherein the second downlink MAC CE is a downlink MAC CE that does not include an activated TCI state.

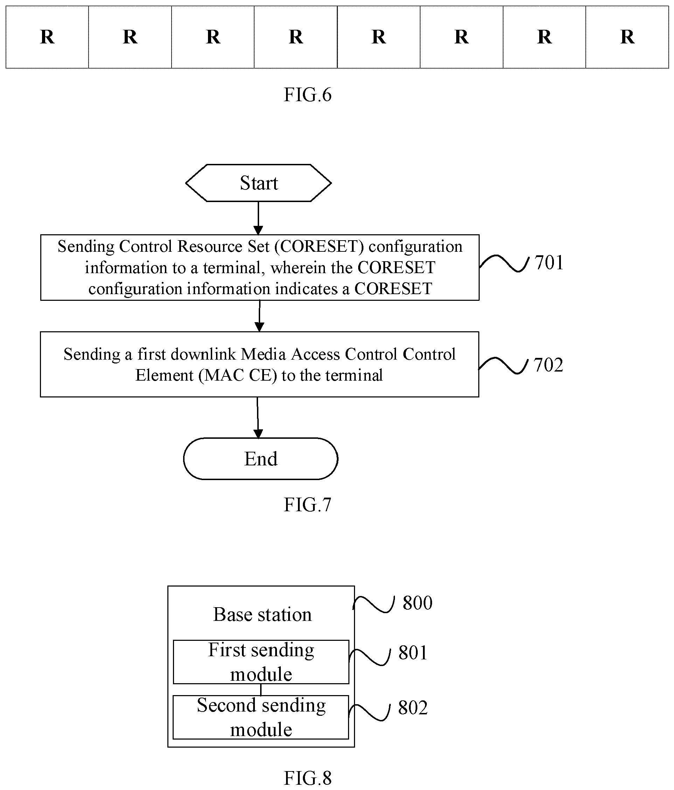

A sub-header corresponding to the second MAC CE is shown in FIG. 5. As shown in FIG. 6, the second MAC CE has a fixed size and each bit is a reserved bit, all of which is set to "0". When the terminal receives the MAC CE, it indicates monitoring the CORSET is stopped.

The second MAC CE instructs the terminal to stop monitoring the CORSET, so that the terminal is not always in a state of monitoring a CORESET, thereby reducing power consumption of the terminal.

In the resource monitoring method according to an embodiment of the present disclosure, if a UE is newly configured with a CORESET in a non-initial cell access phase, the target Transmission Configuration Indication (TCI) state used for monitoring the CORESET is determined according to the predefined TCI state or a first downlink Media Access Control Control Element (MAC CE) sent by a base station, so that not only the TCI state used for monitoring the CORESET may be changed flexibly, but also a signaling overhead may be saved by the method of indicating the TCI state through the MAC CE. In addition, an MAC CE is introduced as an identifier to stop monitoring the CORESET, which reduces the power consumption of the terminal.

As shown in FIG. 7, an embodiment of the present disclosure further provides a resource monitoring method applied to a base station. The method includes steps 701-702.

Step 701: sending Control Resource Set (CORESET) configuration information to a terminal, wherein the CORESET configuration information indicates a CORESET.

The Control Resource Set (CORESET) includes a plurality of search spaces, the plurality of search spaces include a plurality of candidate positions available for transmitting a Physical Downlink Control Channel (PDCCH).

Step 702: sending a first downlink Media Access Control Control Element (MAC CE) to the terminal.

The first downlink MAC CE is a downlink MAC CE including an activated TCI state.

The base station sends the first downlink MAC CE to the terminal, so that the terminal determines, according to a TCI state activated in the first downlink MAC CE, the target TCI state used for monitoring the CORESET, and solves the problem that there is no relevant solution for how to monitor a CORESET if the terminal is newly configured with a CORESET, and the method of the present disclosure can flexibly change the target TCI state used for monitoring a CORESET, and has higher flexibility in resource configuration.

Further, before step 702 described above, the method further includes: configuring, for the terminal, a TCI state used for monitoring the CORESET.

The base station pre-configures, through the RRC, the TCI state used for monitoring the CORESET, so as to facilitate the terminal to monitor the CORESET using the TCI state configured by the base station when the terminal receives the CORESET configuration information.

For example, the base station configures, through the RRC, a first TCI state of a plurality of TCIs of this CORESET as a TCI state used for monitoring the CORESET; or, a TCI state, having a minimum index or a maximum index, among the plurality of TCI states is predetermined by a protocol to be a TCI state used for monitoring the CORESET.

When the terminal receives the CORESET configuration information sent by the base station, the terminal first monitors the CORESET indicated by the CORESET configuration information through the TCI state configured by the base station, and then changes the TCI State used for monitoring the CORESET after receiving the MAC CE. In this way, the problem about how to monitor a CORESET if the terminal is newly configured the CORESET is addressed.

Further, indices corresponding to K or M TCI states are mapped in the first downlink MAC CE, and an index corresponding to the activated TCI state is a first preset threshold value, an index corresponding to an unactivated TCI state is a second preset threshold value, and there is only one activated TCI state among the K or M TCI states.

The maximum number of TCI states is M, both K and M are positive integers greater than 2, and K is less than or equal to M. The first preset threshold value may be specifically 1, and the second preset threshold may be specifically 0. K is the number of TCI states configured by the base station for the terminal via a Radio Resource Control (RRC) to monitor a CORESET, and M may specifically be 128.

A format and a sub-header of the first downlink MAC CE are the same as the format and the sub-header of the first MAC CE in the resource monitoring method applied to the terminal side.

In the above implementation, the target TCI state is determined according to the first downlink MAC CE, and a signaling overhead is saved.

In addition, in a specific embodiment of the present disclosure, the terminal cannot monitor the CORESET without a limited time duration, and another LCID may be used to indicate a corresponding MAC CE, so as to indicate whether monitoring the CORESET is stopped.

The resource monitoring method of the embodiment of the present disclosure further includes: sending a second downlink MAC CE to the terminal, wherein the second downlink MAC CE is a downlink MAC CE that does not include an activated TCI state.

When the terminal receives the second downlink MAC CE, the terminal stops monitoring the CORESET, and the second downlink MAC CE is a downlink MAC CE that does not include an activated TCI state.

A sub-header corresponding to the second MAC CE is shown in FIG. 5. As shown in FIG. 6, the second MAC CE has a fixed size and each bit is a reserved bit, all of which is set to "0". When the terminal receives the MAC CE, it indicates monitoring the CORSET is stopped.

Here, when the terminal receives the second downlink MAC CE, the terminal stops monitoring the CORSET, so that the terminal is not always in the state of monitoring the CORESET, and the power consumption of the terminal is reduced.

The resource monitoring method according to an embodiment of the present disclosure sends Control Resource Set (CORESET) configuration information to a terminal, wherein the CORESET configuration information indicates a CORESET, and sends a first downlink Media Access Control Control Element (MAC CE) to the terminal, so that the terminal may determine, according to the TCI state activated in the first downlink MAC CE, the target TCI state used for monitoring the CORESET, thereby solving the problem about how to monitor a CORESET if the terminal is newly configured with the CORESET. In addition, the method of the present disclosure can flexibly change the target TCI state used for monitoring the CORESET, and has higher flexibility in resource configuration.

As shown in FIG. 8, an embodiment of the present disclosure also provides a base station 800. The base station 800 includes a first sending module 801 and a second sending module 802.

The first sending module 801 is used for sending Control Resource Set (CORESET) configuration information to a terminal, wherein the CORESET configuration information indicates a CORESET.

The second sending module 802 is used for sending a first downlink Media Access Control Control Element (MAC CE) to the terminal.

The first downlink MAC CE is a downlink MAC CE including an activated TCI state.

The base station of the embodiment of the present disclosure further includes a configuring module. The configuring module is used for configuring, for the terminal, a TCI state used for monitoring the CORESET.

In the base station of the embodiment of the present disclosure, indices corresponding to K or M TCI states are mapped in the first downlink MAC CE, and an index corresponding to the activated TCI state is a first preset threshold value, an index corresponding to an unactivated TCI state is a second preset threshold value, and there is only one activated TCI state among the K or M TCI states.

The maximum number of TCI states is M, both K and M are positive integers greater than 2, and K is less than or equal to M.

The base station of the embodiment of the present disclosure further includes a third sending module. The third sending module is used for sending a second downlink MAC CE to the terminal, wherein the second downlink MAC CE is a downlink MAC CE that does not include an activated TCI state.

It should be noted that the base station in the embodiment is a base station corresponding to the above-described resource monitoring method applied to the base station side, and all implementations of the above-described embodiment are applicable to the base station in the embodiment, and the same technical effect can also be achieved.

Some embodiments of the present disclosure also provide a base station. The base station includes a storage, a processor, and a computer program stored on the storage and executable by the processor, wherein when the computer program is executed by the processor, the processor implements each process in the embodiment of the resource monitoring method described above, and the same technical effect can be achieve. To avoid repetition, description thereof will not be repeated here.

An embodiment of the present disclosure also provides a computer readable storage medium, wherein a computer program is stored on the computer readable storage medium, wherein when the computer program is executed by a processor, the processor implements various processes in the resource monitoring method described above, and the same technical effect can be achieved. To avoid duplication, description thereof will not be repeated here. The computer readable storage medium is, for example, a Read-Only Memory (ROM), a Random Access Memory (RAM), a magnetic disk or an optical disc.

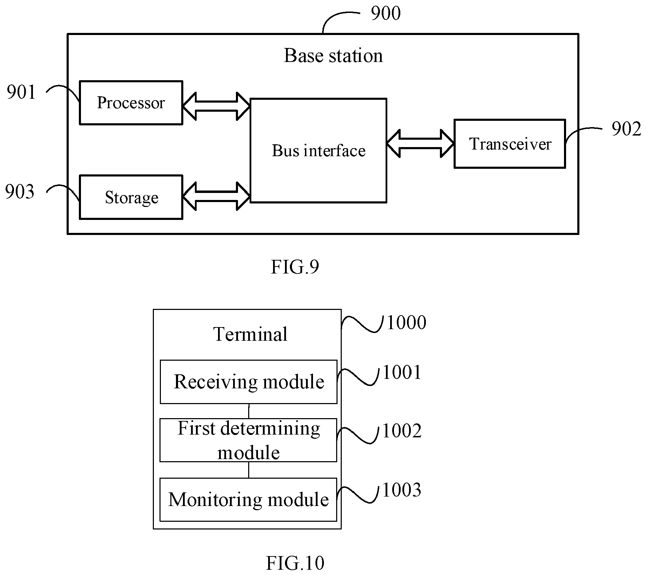

FIG. 9 is a structural diagram of a base station according to an embodiment of the present disclosure, which can realize details of the resource monitoring method and achieve the same effect. As shown in FIG. 9, the base station 900 includes a processor 901, a transceiver 902, a storage 903, and a bus interface, wherein, the processor 901 is used to read a program in the storage 903 to perform following processes: sending Control Resource Set (CORESET) configuration information to a terminal, wherein the CORESET configuration information indicates a CORESET; and sending a first downlink Media Access Control Control Element (MAC CE) to the terminal, wherein the first downlink MAC CE is a downlink MAC CE including an activated TCI state.

In FIG. 9, a bus architecture may include any number of interconnected buses and bridges, specifically various circuits such as one or more processors represented by the processor 901 and a memory represented by the storage 903 are linked together. The bus architecture may also link together various other circuits, such as peripheral devices, voltage regulators, and power management circuits, which are well known in the art, and thus will not be described further herein. The bus interface provides an interface. The transceiver 902 may be a plurality of elements, i.e., including a transmitter and a receiver, for providing elements for communicating with various other devices over a transmission medium.

The processor 901 is responsible for managing the bus architecture and general processing, and the storage 903 may store data used by the processor 901 when performing operations.

Optionally, the processor 901 reads the program in the storage 903 to perform a following step: configuring, for the terminal, a TCI state used for monitoring the CORESET.

Optionally, indices corresponding to K or M TCI states are mapped in the first downlink MAC CE, and an index corresponding to the activated TCI state is a first preset threshold value, an index corresponding to an unactivated TCI state is a second preset threshold value, and there is only one activated TCI state among the K or M TCI states.

The maximum number of TCI states is M, both K and M are positive integers greater than 2, and K is less than or equal to M.

Optionally, the processor 901 reads the program in the storage 903 to perform a following step: sending a second downlink MAC CE to the terminal, wherein the second downlink MAC CE is a downlink MAC CE that does not include an activated TCI state.

Abase station of an embodiment of the present disclosure sends Control Resource Set (CORESET) configuration information to a terminal, so that the terminal may determine, according to the TCI state activated in the first downlink MAC CE, the target TCI state used for monitoring the CORESET, thereby solving the problem about how to monitor a CORESET if the terminal is newly configured with the CORESET. In addition, the method of the present disclosure can flexibly change the target TCI state used for monitoring the CORESET, and has higher flexibility in resource configuration.

As shown in FIG. 10, an embodiment of the present disclosure also provides a terminal 1000. The terminal includes a receiving module 1001, a first determining module 1002, and a monitoring module 1003.

The receiving module 1001 is used for receiving Control Resource Set (CORESET) configuration information sent by a base station, wherein the CORESET configuration information indicates a CORESET.

The first determining module 1002 is used for determining, according to a predefined Transmission Configuration Indication (TCI) state or a first downlink Media Access Control Control Element (MAC CE) sent by the base station, a target TCI state used for monitoring the CORESET.

The monitoring module 1003 is used for monitoring the CORESET according to the target TCI state.

The first downlink MAC CE is a downlink MAC CE including an activated TCI state.

In the terminal according to the embodiment of the present disclosure, the first determining module is used for, after receiving a first downlink Media Access Control Control Element (MAC CE) sent by the base station, determining a TCI state activated in the first downlink MAC CE as the target TCI state.

In the terminal according to the embodiment of the present disclosure, the first determining module is used for, if the activated TCI state is in an N-th subframe, then starting monitoring the CORESET in an (N+t)-th subframe, where N is a positive integer, t is a natural number.

In the terminal according to the embodiment of the present disclosure, the first determining module is used for, first determining a synchronization signal block as the target TCI state, and when the first downlink MAC CE is received, changing the target TCI state to a TCI state activated in the first downlink MAC CE.

In the terminal according to the embodiment of the present disclosure, the first determining module is used for, first, determining a predefined TCI state as the target TCI state, and when the first downlink MAC CE is received, changing the target TCI state to a TCI state activated in the first downlink MAC CE; wherein the predefined TCI state is a TCI state pre-configured by a base station or agreed by a protocol.

In the terminal according to the embodiment of the present disclosure, indices corresponding to K or M TCI states are mapped in the first downlink MAC CE, and the index corresponding to the activated TCI state is the first preset threshold value, the index corresponding to the unactivated TCI state is the second preset threshold value, and there is only one activated TCI state among the K or M TCI states; the maximum number of TCI states is M, both K and M are positive integers greater than 2, and K is less than or equal to M.

The terminal of the embodiment of the present disclosure further includes a second determining module. The second determining module is used for when receiving a second downlink MAC CE sent by a base station, stopping monitoring the CORESET, wherein the second downlink MAC CE is a downlink MAC CE that does not include an activated TCI state.

It should be noted that the terminal embodiment is a terminal corresponding to the above-described resource monitoring method applied to the terminal side, and all implementations of the above-described embodiment are applicable to the terminal embodiment, the same technical effect can also be achieved.

Some embodiments of the present disclosure also provide a terminal. The terminal includes a storage, a processor, and a computer program stored on the storage and executable by the processor, wherein when the computer program is executed by the processor, the processor implements each process in the embodiment of the resource monitoring method applied to the terminal side, and the same technical effect can be achieve. To avoid repetition, description thereof will not be repeated here.

An embodiment of the present disclosure also provides a computer readable storage medium, wherein a computer program is stored on the computer readable storage medium, wherein when the computer program is executed by a processor, the processor implements various processes in the resource monitoring method of a reference signal applied to the terminal side, and the same technical effect can be achieved. To avoid duplication, description thereof will not be repeated here. The computer readable storage medium is, for example, a Read-Only Memory (ROM), a Random Access Memory (RAM), a magnetic disk or an optical disc.

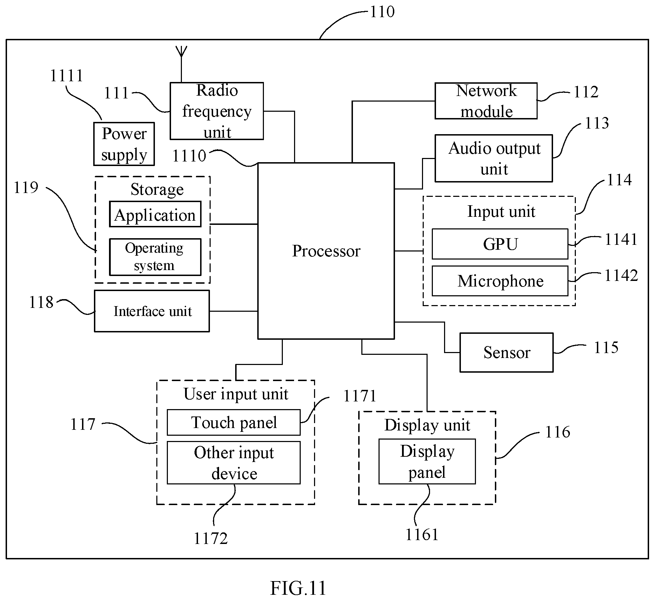

FIG. 11 is a structural block diagram of a terminal according to an embodiment of the present disclosure. An application entity of the resource monitoring method of the present disclosure is described in detail below in conjunction with the figure.

In order to better achieve the above object, FIG. 11 is a schematic diagram of a hardware structure of a terminal for implementing various embodiments of the present disclosure. The terminal 110 shown in FIG. 11 includes, but is not limited to, a radio frequency unit 111, a network module 112, an audio output unit 113, an input unit 1114, a sensor 1115, a display unit 116, a user input unit 117, an interface unit 118, a storage 119, a processor 1110, and a power supply 111, and other components. Those skilled in the art will appreciate that a structure of the terminal shown in FIG. 11 does not constitute a limitation of a terminal. The terminal may include more or fewer components than illustrated, or combine certain components, or different component arrangements. In some embodiments of that present disclosure, the terminal includes, but is not limited to, a mobile phone, a tablet computer, a notebook computer, a palmtop computer, an in-vehicle terminal, a wearable device, a pedometer, and the like..

The radio frequency unit 111 is used for transmit and receive data under the control of the processor 1110.

The processor 1110 is used for receiving Control Resource Set (CORESET) configuration information sent by a base station, wherein the CORESET configuration information indicates a CORESET; determining, according to a predefined Transmission Configuration Indication (TCI) state or a first downlink Media Access Control Control Element (MAC CE) sent by a base station, a target TCI state used for monitoring the CORESET; monitoring the CORESET according to the target TCI state; wherein the first downlink MAC CE is a downlink MAC CE including an activated TCI state.

The processor 1110 is further used for: after receiving the first downlink Media Access Control Control Element (MAC CE) sent by the base station, determining a TCI state activated in the first downlink MAC CE as the target TCI state.

The processor 1110 is further used for: if the activated TCI state is in an N-th subframe, then starting monitoring the CORESET in an (N+t)-th subframe, where N is a positive integer, t is a natural number.

The processor 1110 is further used for: first determining a synchronization signal block as the target TCI state, and when the first downlink MAC CE is received, changing the target TCI state to a TCI state activated in the first downlink MAC CE.

The processor 1110 is further used for: first, determining a predefined TCI state as the target TCI state, and when the first downlink MAC CE is received, changing the target TCI state to a TCI state activated in the first downlink MAC CE; wherein the predefined TCI state is a TCI state pre-configured by a base station or agreed by a protocol.

Optionally, indices corresponding to K or M TCI states are mapped in the first downlink MAC CE, and the index corresponding to the activated TCI state is the first preset threshold value, the index corresponding to the unactivated TCI state is the second preset threshold value, and there is only one activated TCI state among the K or M TCI states; the maximum number of TCI states is M, both K and M are positive integers greater than 2, and K is less than or equal to M.

The processor 1110 is further used for: when receiving a second downlink MAC CE sent by a base station, stopping monitoring the CORESET, wherein the second downlink MAC CE is a downlink MAC CE that does not include an activated TCI state.

After the terminal according to the embodiment of the present disclosure receives the Control Resource Set (CORESET) configuration information configured by the base station, the terminal determines, according to the predefined TCI state or the first downlink MAC CE transmitted by the base station, the target TCI state used for monitoring the CORESET, and monitors the CORESET according to the determined target TCI state, thereby solving the problem that how to perform monitoring of a CORESET if the terminal is newly configured with the CORESET. In addition, the method of the present disclosure can flexibly change the target TCI state used for monitoring a CORESET, and has higher flexibility in resource configuration.

It should be understood that, in the embodiment of the present disclosure, the radio frequency unit 111 is used for receiving and transmitting signals in processes of transmitting and receiving information or talking. Specifically, after the radio frequency unit 111 receives downlink data from the base station, and the downlink data is transferred by the radio frequency unit 111 to the processor 1110 for processing; and additionally the radio frequency unit 111 sends uplink data to the base station. Generally, the radio frequency unit 111 includes, but is not limited to, an antenna, at least one amplifier, a transceiver, a coupler, a low noise amplifier, a duplexer, and the like. In addition, the radio frequency unit 111 may also communicate with a network and other devices through a wireless communication system.

The terminal provides a wireless broadband internet access to a user through the network module 112, such as helping the user to send and receive emails, browse web pages, access streaming media, and the like.

The audio output unit 113 may convert audio data received by the radio frequency unit 111 or the network module 112 or stored in the storage 119 into an audio signal and output the audio signal as sound. The audio output unit 113 may also provide audio output (e.g., a call signal reception sound, a message reception sound, etc.) related to a specific function performed by the terminal 110. The audio output unit 113 includes a speaker, a buzzer, a receiver, and the like.

The input unit 114 is used to receive an audio or video signal. The input unit 114 may include a Graphics Processing Unit (GPU) 1141 and a microphone 1142. The graphics processing unit 1141 processes image data of a still picture or a video obtained by an image capturing device such as a camera in a video capturing mode or an image capturing mode. The processed image frame may be displayed on the display unit 1116. Image frames processed by the graphics processing unit 1141 may be stored in the storage 119 (or other storage media) or sent via the radio frequency unit 111 or the network module 112. The microphone 1142 may receive sound and be able to process such sound into audio data. The processed audio data may be converted, in a case of a telephone communication mode, into a format output that may be sent to a mobile communication base station via the radio frequency unit 111.

The terminal 110 also includes at least one sensor 115, such as a light sensor, a motion sensor, and other sensors. In particular, the light sensor includes an ambient light sensor and a proximity sensor, wherein the ambient light sensor may adjust brightness of the display panel 1161 according to brightness of ambient light. The proximity sensor may turn off the display panel 1161 and/or a backlight when the terminal 110 moves close to the ear. As one type of motion sensor, the accelerometer sensor can detect a value of an acceleration in each direction (generally the three axes directions), and can detect a magnitude and a direction of gravity when being stationary, can be used to recognize a posture of a terminal (such as horizontal-vertical screen switching, a related game, a magnetometer posture calibration), a vibration-recognition related function (such as a pedometer, tapping), and the like. The sensor 115 may further include a fingerprint sensor, a pressure sensor, an iris sensor, a molecular sensor, a gyroscope, a barometer, a hygrometer, a thermometer, an infrared sensor, and the like, which will not be described herein.

The display unit 116 is used to display information inputted by the user or information provided to the user. The display unit 116 may include a display panel 1161 that may be configured in the form of a Liquid Crystal Display (LCD), an Organic Light-Emitting Diode (OLED), or the like.

The user input unit 117 may be used to receive inputted digital or character information and generate a key signal input related to user-setting and function control of a terminal. Specifically, the user input unit 117 includes a touch panel 1171 and other input devices 1172. The touch panel 1171, also referred to as a touch screen, may collect a touch operation (e.g., an operation of a user using any suitable object or accessory, such as a finger, stylus, or the like, on or near the touch panel 1171) of the user on or near the touch panel 1171. The touch panel 1171 may include two parts, i.e., a touch detection device and a touch controller. The touch detection device detects a touch orientation of the user, detects a signal brought about by a touch operation, transmits the signal to the touch controller, and the touch controller receives touch information from the touch detection device, converts the touch information into contact coordinates and sends the contact coordinates to the processor 1110, and receives and executes commands from the processor 1110. In addition, the touch panel 1171 may be implemented in various types such as a resistance type, a capacitance type, an infrared ray, and a surface acoustic wave. The user input unit 117 may also include other input devices 1172 in addition to the touch panel 1171. Specifically, the other input devices 1172 may include, but are not limited to, a physical keyboard, function keys (such as volume control keys, switch keys, etc.), a trackball, a mouse, and a joystick, which will not be described herein.

Further, the touch panel 1171 may be overlaid on the display panel 1161, and after the touch panel 1171 detects a touch operation on or near the touch panel 1171, the touch operation is sent by touch panel 1171 to the processor 1110 to determine the type of a touch event. The processor 1110 then provides a corresponding visual output on the display panel 1161 according to the type of the touch event. Although in FIG. 11, the touch panel 1171 and the display panel 1161 are two separate components for implementing input and output functions of the terminal, the input and output functions of the terminal in some embodiments may be realized by integrating the touch panel 1171 with the display panel 1161, and the present disclosure is not limited thereto.

The interface unit 118 is an interface in which an external device is connected to the terminal 110. For example, the external device may include a wired or wireless headset port, an external power supply (or a battery charger) port, a wired or wireless data port, a memory card port, a port for connecting a device having an identification module, an audio input/output (I/O) port, a video I/O port, a headphone port, and so on. The interface unit 118 may be used to receive input (e.g., data information, power, etc.) from an external device and transmit the received input to one or more elements within the terminal 110 or may be used to transmit data between the terminal 110 and the external device.

The storage 119 may be used to store software programs and various types of data. The storage 119 may mainly include a storage program area and a storage data area, wherein, the storage program area may store an operating system, an application program required by at least one function (such as a sound playing function, an image playing function, etc.), and the like; the storage data area may store data (such as audio data, a phonebook, etc.) created according to a use condition of the mobile phone. In addition, the storage 119 may include a high speed random access memory, and may also include a non-transitory memory, such as at least one disk storage device, a flash memory device, or other volatile solid state storage device.

The processor 1110 is a console of the terminal, connects various parts of the entirety of the terminal using various interfaces and lines, and executes various functions and processes data of the terminal by running or executing software programs and/or modules stored in the storage 119, and by calling data stored in the storage 119, thereby integrally monitoring the terminal. The processor 1110 may include one or more processing units; optionally, the processor 1110 may integrate an application processor and a modem processor, wherein the application processor primarily processes an operating system, a user interface, an application program, etc. The modem processor mainly handles wireless communication. It will be appreciated that the above-described modem processor may also not be integrated into the processor 1110.

The terminal 110 may also include a power supply 1111 (such as a battery) that supplies power to various components, optionally, the power supply 1111 may be logically connected to the processor 1110 via a power management system. Thus, functions such as charging, discharging, and power consumption management are managed by the power management system.

In addition, the terminal 110 includes some functional modules not shown, which will not be described here.

The various embodiments in this specification are described in a progressive manner, each embodiment is mainly described in respect of difference from the other embodiments, and the same similar parts between the various embodiments may be referred to each other.

Those skilled in the art will appreciate that the embodiments of the present disclosure may be provided as methods, devices, or computer program products. Accordingly, the present disclosure may take forms of a full hardware embodiment, a full software embodiment, or an embodiment incorporating software and hardware aspects. Moreover, the present disclosure may employ a form of a computer program product implemented on one or more computer-usable storage media (including, but not limited to, a magnetic disk storage, a Compact Disc Read-Only Memory (CD-ROM), an optical storage) containing a computer-usable program code.

The present disclosure is described with reference to a flowchart and/or a block diagram of a method, a terminal device (a system), and a computer program product according to some embodiments of the present disclosure. It should be understood that each of the flows and/or blocks in the flowchart and/or block diagram, as well as a combination of the flows and/or blocks in the flowchart and/or block diagram, may be implemented by computer program instructions. These computer program instructions may be provided to a processor of a general purpose computer, a special purpose computer, an embedded processor, or other programmable data processing devices to produce a machine, so that instructions executed by a processor of a computer or other programmable data processing device generate a means for implementing functions specified in one or more flows of a flowchart or one or more blocks of a block diagram.

These computer program instructions may also be stored in a computer readable memory capable of directing a computer or other programmable data processing device to operate in a particular manner, causing an instruction stored in the computer readable memory to generate an article of manufacture including an instruction device, the instruction device implements the functions specified in one or more flows of a flowchart or one or more blocks of a block diagram.

These computer program instructions may also be loaded onto a computer or other programmable data processing device such that a series of operational steps are performed on the computer or other programmable device to produce a computer-implemented process, so that instructions executed on the computer or other programmable device provide steps for implementing the functions specified in one or more flows of a flowchart or one or more blocks of a block diagram.

Although preferred embodiments of the embodiments of the present disclosure have been described, additional changes and modifications may be made to these embodiments once basic inventive concepts are known to those skilled in the art. Therefore, the appended claims are intended to be construed to include the preferred embodiments and all variations and modifications that fall within the scope of the embodiments of the present disclosure.

It should also be noted that relational terms such as first, second and the like are only used to distinguish one entity or operation from another entity or operation, but does not necessarily require or imply that any such actual relationship or order exists between these entities or operations. Also, such term as "include", "comprise" or any other variant thereof is intended to cover non-exclusive inclusion, so that processes, methods, goods or devices including a series of elements include not only those elements but also other elements which are not explicitly listed, or may also include elements inherent to such processes, methods, goods, or devices. In absence of more restrictions, an element after a statement "including one ......" is not excluded from coexistence of additional identical elements in a process, a method, goods, or a device that includes the element.

The above description are only preferred embodiments of the present disclosure. Various modifications and variations may be made by those skilled in the art without departing the principle of the present disclosure, and the modification and variations are also within the protection scope of the present disclosure.

## Claims

1. A resource monitoring method, applied to a terminal, the method comprising:
receiving Control Resource Set (CORESET) configuration information sent by a base station, wherein the CORESET configuration information indicates a CORESET;
determining, according to a predefined Transmission Configuration Indication (TCI) state or a first downlink Media Access Control Control Element (MAC CE) sent by the base station, a target TCI state used for monitoring the CORESET;
monitoring the CORESET according to the target TCI state;
wherein the first downlink MAC CE is a downlink MAC CE comprising an activated TCI state.

2. The method according to claim 1, wherein determining, according to the first downlink MAC CE sent by the base station, the target TCI state used for monitoring the CORESET, comprises:
after receiving a first downlink MAC CE sent by the base station, determining, as the target TCI state, a TCI state activated in the first downlink MAC CE.

3. The method according to claim 2, wherein monitoring the CORESET according to the target TCI state, comprises:
if the activated TCI state is in an N-th subframe, starting monitoring the CORESET in an (N+t)-th subframe, where N is a positive integer, t is a natural number.

4. The method according to claim 1, wherein determining, according to the predefined TCI state, the target TCI state used for monitoring the CORESET, comprises:
determining a synchronization signal block as the target TCI state, and when a first downlink MAC CE is received, changing the target TCI state to a TCI state activated in the first downlink MAC CE.

5. The method according to claim 1, wherein determining, according to the predefined TCI state, the target TCI state used for monitoring the CORESET, comprises:
determining the predefined TCI state as the target TCI state, and when a first downlink MAC CE is received, changing the target TCI state to a TCI state activated in the first downlink MAC CE;
wherein the predefined TCI state is a TCI state pre-configured by the base station or agreed by a protocol.

6. The method according to claim 2, 4 or 5, wherein indices corresponding to K or M TCI states are mapped in the first downlink MAC CE, and an index corresponding to the activated TCI state is a first preset threshold value, an index corresponding to an unactivated TCI state is a second preset threshold value, and there is only one activated TCI state among the K or M TCI states;
the maximum number of TCI states is M, both K and M are positive integers greater than 2, and K is less than or equal to M.

7. The method according to claim 1, further comprising:
when receiving a second downlink MAC CE sent by the base station, stopping monitoring the CORESET, wherein the second downlink MAC CE is a downlink MAC CE that does not comprise the activated TCI state.

8. A resource monitoring method, applied to a base station, the method comprising:
sending Control Resource Set (CORESET) configuration information to a terminal, wherein the CORESET configuration information indicates a CORESET;
sending a first downlink Media Access Control Control Element (MAC CE) to the terminal;
wherein the first downlink MAC CE is a downlink MAC CE comprising an activated TCI state.

9. The method according to claim 8, wherein before sending the first downlink MAC CE to the terminal, the method further comprises:
configuring, for the terminal, a TCI state used for monitoring the CORESET.

10. The method according to claim 8, wherein, indices corresponding to K or M TCI states are mapped in the first downlink MAC CE, and an index corresponding to an activated TCI state is a first preset threshold value, an index corresponding to an unactivated TCI state is a second preset threshold value, and there is only one activated TCI state among the K or M TCI states;
wherein the maximum number of TCI states is M, both K and M are positive integers greater than 2, and K is less than or equal to M.

11. The method according to claim 8, further comprising:
sending a second downlink MAC CE to the terminal, wherein the second downlink MAC CE is a downlink MAC CE that does not comprise the activated TCI state.

12. A terminal, comprising:
a receiving module, used for receiving Control Resource Set (CORESET) configuration information sent by a base station, wherein the CORESET configuration information indicates a CORESET;
a first determining module, used for determining, according to a predefined Transmission Configuration Indication (TCI) state or a first downlink Media Access Control Control Element (MAC CE) sent by the base station, a target TCI state used for monitoring the CORESET;
a monitoring module, used for monitoring the CORESET according to the target TCI state;
wherein the first downlink MAC CE is a downlink MAC CE comprising an activated TCI state.

13. The terminal according to claim 12, wherein the first determining module is used for:
after receiving the first downlink MAC CE sent by the base station, determining, as the target TCI state, a TCI state activated in the first downlink MAC CE.

14. The terminal according to claim 13, wherein the first determining module is used for:
if the activated TCI state is in an N-th subframe, starting monitoring the CORESET in an (N+t)-th subframe, where N is a positive integer, t is a natural number.

15. The terminal according to claim 12, wherein the first determining module is used for:
determining a synchronization signal block as the target TCI state, and when a first downlink MAC CE is received, changing the target TCI state to a TCI state activated in the first downlink MAC CE.

16. The terminal according to claim 12, wherein the first determining module is used for:
determining the predefined TCI state as the target TCI state, and when a first downlink MAC CE is received, changing the target TCI state to a TCI state activated in the first downlink MAC CE;
wherein the predefined TCI state is a TCI state pre-configured by the base station or agreed by a protocol.

17. The terminal according to claim 13, 15 or 16, wherein indices corresponding to K or M TCI states are mapped in the first downlink MAC CE, and an index corresponding to the activated TCI state is a first preset threshold value, an index corresponding to an unactivated TCI state is a second preset threshold value, and there is only one activated TCI state among the K or M TCI states;
the maximum number of TCI states is M, both K and M are positive integers greater than 2, and K is less than or equal to M.

18. The terminal according to claim 12, further comprising:
a second determining module, used for, when receiving a second downlink MAC CE sent by the base station, stopping monitoring the CORESET, wherein the second downlink MAC CE is a downlink MAC CE that does not comprise the activated TCI state.

19. A terminal, comprising:
a storage, a processor, and a computer program stored on the storage and executable by the processor, wherein when the computer program is executed by the processor, the processor implements steps of the resource monitoring method according to any one of claims 1-7.

20. Abase station, comprising:
a first sending module, used for sending Control Resource Set (CORESET) configuration information to a terminal, wherein the CORESET configuration information indicates a CORESET;
a second sending module, used for sending a first downlink Media Access Control Control Element (MAC CE) to the terminal;
wherein the first downlink MAC CE is a downlink MAC CE comprising an activated TCI state.

21. The base station according to claim 20, further comprising:
a configuring module, used for configuring, for the terminal, a TCI state used for monitoring the CORESET.

22. The base station according to claim 20, wherein indices corresponding to K or M TCI states are mapped in the first downlink MAC CE, and an index corresponding to an activated TCI state is a first preset threshold value, an index corresponding to an unactivated TCI state is a second preset threshold value, and there is only one activated TCI state among the K or M TCI states;
wherein the maximum number of TCI states is M, both K and M are positive integers greater than 2, and K is less than or equal to M.

23. The base station according to claim 20, further comprising:
a third sending module, used for sending a second downlink MAC CE to the terminal, wherein the second downlink MAC CE is a downlink MAC CE that does not comprise the activated TCI state.

24. Abase station, comprising:
a storage, a processor, and a computer program stored on the storage and executable by the processor, wherein when the computer program is executed by the processor, the processor implements steps of the resource monitoring method according to any one of claims 8-11.

25. A computer readable storage medium, comprising:
a computer program stored on the computer readable storage medium,
wherein when the computer program is executed by a processor, the processor implements steps of the resource monitoring method according to any one of claims 1-7, or steps of the resource monitoring method according to any one of claims 8-11.
